# EUROPÄISCHE PATENTSCHRIFT

(11) **EP 3 028 266 B1**
(45) Veröffentlichungstag und Bekanntmachung des Hinweises auf die Patenterteilung: **27.09.2017**
(21) Anmeldenummer: 14747883.8
(22) Anmeldetag: 24.07.2014
(51) Int. Cl.: G08G 1/16, B60W 30/08

(54) **UMFELDMODELLE FÜR FAHRZEUGE**
MODELS OF THE SURROUNDINGS FOR VEHICLES
MODÈLES D'ENVIRONNEMENT DE VÉHICULES

(30) Priorität: 01.08.2013 DE 102013215098
(43) Veröffentlichungstag der Anmeldung: 08.06.2016
(73) Patentinhaber: Bayerische Motoren Werke Aktiengesellschaft, 80809 München (DE)
(72) Erfinder: VANHOLME, Benoit, 80801 München (DE)
(86) Internationale Anmeldenummer: PCT/EP2014/065917
(87) Internationale Veröffentlichungsnummer: WO 2015/014708

(56) Entgegenhaltungen:
- DE-A1-102007 048 809
- DE-A1-102009 027 755
- DE-A1-102010 049 091

## Beschreibung

Die Erfindung betrifft ein Verfahren zum Bereitstellen eines Umfeldmodells für ein Fahrzeug, ein entsprechendes Computerprogramm und eine Rechenvorrichtung sowie ein Fahrzeug zu demselben Zweck.

In Zukunft werden Kraftfahrzeuge über eine Fülle von Fahrerassistenzsystemen verfügen, die beispielsweise den Fahrer vor Kollisionen warnen und gegebenenfalls auch durch Eingriffe versuchen, Kollisionen zu vermeiden. Beispiele solcher Fahrerassistenzsysteme sind ein Notbremsassistent, ein Spur-Halte-Assistent, ein Toter-Winkel-Assistent, ein Einparkassistent und ein sogenannter Automatic Cruise Control Assistent (ACC), insbesondere für Autobahnfahrten. Darüber hinaus setzt auch ein hochautomatisiertes Fahren, also die Fahrt eines Fahrzeugs ohne (oder im Wesentlichen ohne) menschlichen Eingriff die Kenntnis des Umfeldes des Fahrzeugs voraus. Um diese Funktionen bereit zu stellen, ist für Fahrerassistenzsysteme die Kenntnis des Umfeldes des Fahrzeugs entscheidend. Dazu wird das Umfeld mit einem oder mehreren Sensoren wie Radar, Lidar, Kamera, Ultraschallsensoren oder ähnlichen aus dem Stand der Technik bekannten Sensoren abgetastet bzw. aufgenommen. Mithilfe der Sensormessungen wird mithilfe ebenfalls im Stand der Technik bekannter Signalverarbeitungsverfahren dann die Belegung des Umfeldes durch Objekte erkannt. Die Belegung zeigt an, dass das Umfeld in einem bestimmten Abschnitt nicht durch das Fahrzeug befahren werden kann und gibt damit die Position des Objektes an. Zusätzlich wird der Typ der Objekte erkannt, also ob es sich um Fußgänger, Fahrzeuge, Fahrbahnbegrenzungen, etc. handelt. Mithilfe der erkannten Belegungen und der Typen der Objekte wird ein Umfeldmodell erstellt, das Informationen zur Belegung des Umfeldes durch Objekte, also insbesondere die Abschnitte des Umfeldes, die von Objekten belegt sind, und den Typ der Objekte bereitstellt.

Dokument DE 10 2007 048 809 A1 offenbart ein Verfahren zur Erkennung von verdeckten Objekten im Straßenverkehr, bei dem einerseits die Umgebung eines Fahrzeugs und andererseits Bewegungsgrößen des eigenen Fahrzeugs mittels Sensoren erfasst werden, diese als Informationen an im Umfeld befindliche Fahrzeuge mittels einer Schnittstelle zur Fahrzeug zu Fahrzeug Kommunikation übertragen und von den im Umfeld befindlichen Fahrzeugen empfangen werden.

Ein Konzept zum hochautomatisierten Fahren auf Autobahnen basierend auf einem Umfeldmodell ist beispielsweise in "A legal safety concept for highly automated driving on highways" von Benoit Vanholme, et al., Intelligent Vehicles Symposium (IV), 2011 IEEE, 5-9 June 2011, Seiten 563 - 570 vorgestellt. Ein solches Konzept ist ebenfalls in der Dissertation "Highly Automated Driving on Highways based on Legal Safety", University of Evry-Val-d'Esssonne vom 18.06.2012 von Benoit Vanholme ten vorgestellt. Ein Phantomobjekt ist in dieser Publikation ein fiktives Objekt, das in einer Entfernung angenommen wird, für die mithilfe der Sensoren des Fahrzeugs keine Belegung erstellt werden kann, weil die Messreichweite der Sensoren überschritten ist.

Darüber hinaus besteht bei der Erstellung eines Umfeldmodells das Problem, dass in Bereichen des Umfeldes, die von Objekten insofern verdeckt werden, als dass die Objekte Sensormessungen in diesen Bereichen verhindern, keine Objekte erkannt werden können. Für diese Bereiche stellt das Umfeldmodell keine Informationen hinsichtlich der Belegung durch Objekte bereit. Beispielsweise kann ein haltender Bus einen vor dem Bus befindlichen Fußgänger verdecken. Zu diesem Fußgänger würden folglich keine Informationen im Umfeldmodell vorliegen. Tritt der Fußgänger dann hinter dem Bus hervor, wird seine Belegung plötzlich im Umfeldmodell erscheinen und eine gegebenenfalls heftige und plötzliche Reaktion der Fahrerassistenzsysteme hervorrufen. Auch besteht eine erhöhte Unfallgefahr.

Die Aufgabe, die der Erfindung zugrunde liegt, ist es, auf Umfeldmodellen aufbauenden Fahrerassistenzsystemen die Berücksichtigung möglicher verdeckter Objekte zu ermöglichen.

Die Aufgabe wird durch ein Verfahren, ein Computerprogramm, eine Rechenvorrichtung sowie ein Fahrzeug gemäß den unabhängigen Ansprüchen gelöst. Vorteilhafte Weiterbildungen sind in den abhängigen Ansprüchen definiert.

In einem Aspekt umfasst ein Verfahren zum Bereitstellen eines Umfeldmodells für ein Fahrzeug: Bereitstellen eines Umfeldmodells, das auf der Grundlage von Sensormessungen von Sensoren des Fahrzeugs gewonnen wurde; wobei das Umfeldmodell Informationen hinsichtlich der Belegung des Umfeldes durch Objekte und insbesondere hinsichtlich des Typs der Objekte im Umfeld des Fahrzeugs bereitstellt; Bestimmen eines Bereiches des Umfeldes, für den von dem Umfeldmodell keine Informationen hinsichtlich einer Belegung durch Objekte bereitgestellt werden; wobei der Bereich innerhalb einer Entfernungsgrenze liegt, für die das Umfeldmodell auf der Grundlagen von Sensormessungen Informationen hinsichtlich der Belegung durch Objekte bereitstellen könnte; Prüfen, ob in dem Bereich ein Phantomobjekt dem Umfeldmodell hinzuzufügen ist, insbesondere anhand einer vordefinierten Vorschrift; Falls ein Phantomobjekt hinzuzufügen ist: Bestimmen der Belegung durch das Phantomobjekt in dem Bereich des Umfeldes; Erzeugen eines erweiterten Umfeldmodells durch das Hinzufügen von Informationen hinsichtlich der Belegung durch das Phantomobjekt zu dem Umfeldmodell; Bereitstellen des erweiterten Umfeldmodells. Der Typ des Objektes kann sich auch nur darauf beziehen, ob sich das Objekt bewegt oder steht.

Es wird somit für den verdeckten Bereich des Umfeldes ein virtuelles Objekt, ein Phantomobjekts, in dem Umfeldmodell angenommen. Phantomobjekte sind insbesondere Annahmen über verdeckte andere Verkehrsteilnehmer und somit eine Sicherheitsmaßnahme. Diese Annahme gleicht die "Blindheit" der Sensorsysteme für verdeckte Bereiche aus. Fahrerassistenzsysteme, insbesondere Systeme zum hochautomatisierten Fahren, können das Objekt somit in ihrer Planung und Funktion berücksichtigen. Die Vorsichtsmaßnahme der Fahrerassistenzsysteme wird so in einer Implementierung von dem jeweiligen Fahrerassistenzsystem selbst in das Umfeldmodell verlagert. Die Sicherheitsmaßnahme im Umfeldmodell würde sich so auf alle Fahrerassistenzsysteme auswirken, die das Umfeldmodell verwenden. Darüber hinaus können Phantomobjekte auch von einem Fahrerassistenzsystem ergänzt werden oder von einer Komponente zwischen der Umfelderstellung und dem Fahrerassistenzsystem.

Durch das Einbeziehen der Phantomobjekte können Fahrerassistenzsysteme ihre Funktion bestmöglich an die Verkehrssituation anpassen (z.B. die Geschwindigkeit limitieren) und so mögliche Unfälle vermeiden bzw. Schäden drastisch reduzieren. In einer typischen Implementierung ist ein Phantomobjekt von einem realen (über Sensormessungen erkannten Objekt) im Umfeldmodell unterscheidbar. Das Phantomobjekt ist also als solches gekennzeichnet. Fahrerassistenzsysteme können nun Phantomobjekte anders als reale Objekte in ihre Funktion, insbesondere die Fahrtplanung bzw. Trajektorienplanung und -auswahl, einbeziehen und somit nicht in gleichem Maß auf Phantomobjekte reagieren, wie sie es für reale Objekte tun. Beispielsweise würde ein Fahrerassistenzsystem in der Fahrtplanung für ein langsameres Phantomobjekt keine Verzögerung einplanen (obwohl es dies für ein langsameres reales Objekt tun würde) und trotzdem in der Fahrtplanung (beispielsweise für zukünftige Fahrttrajektorien oder Geschwindigkeiten) aber dennoch so planen, dass ein Unfall vermieden bzw. gemildert werden kann, wenn sich nachfolgend aufgrund von Sensormessungen herausstellt, dass sich an der Belegung des Phantomobjekts ein reales Objekt befindet. In einer alternativen Implementierung wird jedem Objekt des Umfeldmodells eine Wahrscheinlichkeit für dessen tatsächliche Existenz zugewiesen. Für Phantomobjekte kann diese generell niedriger angesetzt werden, also für Objekte, die über Sensormessungen erkannt wurden.

Bei der Prüfung, ob ein Phantomobjekt in einem verdeckten Bereich anzunehmen ist, wird vorteilhafterweise davon ausgegangen, dass sich die Phantomobjekte, also beispielsweise Fußgänger oder Fahrradfahrer an die Verkehrsregeln halten oder zumindest vorhersehbar verhalten (und dabei nicht an die Verkehrsregeln halten). So wird zum Beispiel angenommen, dass sich ein Fußgänger auf einem Fußgängerüberweg befindet, der durch ein Fahrzeug verdeckt ist. Gleichzeitig muss nicht für jeden verdeckten Bereich ein Phantomobjekt angenommen werden. Auf einer Autobahn beispielsweise wird hinter einem Autobahnpfeiler nicht automatisch ein Fußgänger als Phantomobjekt angenommen.

In einer Weiterbildung umfasst das Prüfen das Bestimmen, ob ein Objekt im Umfeld Sensormessungen von Sensoren des Fahrzeugs in dem Bereich zumindest derart verhindert, dass für diesen Bereich keine Informationen von dem Umfeldmodell bereitgestellt werden können. Der Bereich wird also für Sensormessungen von dem Objekt verdeckt und das Objekt ist ein verdeckendes Objekt.

In einer Weiterbildung umfasst das Bestimmen der Belegung durch das Phantomobjekt in dem Bereich des Umfeldes: Bestimmen des Typs des verhindernden Objektes und Bestimmen einer Annahme bezüglich der Belegung durch das Phantomobjekt und einer Annahme bezüglich des Typs des Phantomobjektes mithilfe einer vorgespeicherten Zuordnung. Die Zuordnung kann Regeln bzw. Vorschriften spezifizieren, wo das Phantomobjekt zu platzieren ist, bzw. wo dessen Belegung ist. Die Belegung kann sich an dem Umfeldmodell und dessen Grenzen orientieren sowie an den verhindernden Objekten. Die Rechenmittel sind dazu eingerichtet, diese Regeln bzw. Vorschriften anzuwenden, um die Belegung durch das Phantomobjekt zu bestimmen.

Die Zuordnung kann eine Regel für die Belegung durch das Phantomobjekt spezifizieren, wobei die Regel insbesondere die Belegung in räumlichen Bezug zu dem Bereich und/oder dem Objekt setzt. Für jeden Typ des verdeckenden Objektes kann eine gesonderte Regel spezifiziert sein.

Der Typ des verhindernden Objektes kann sich auch auf den Unterschied zwischen einem stehenden und einem sich bewegenden verhindernden Objekt beziehen. Somit können in manchen Implementierungen nur zwei Typen existieren: stehendes und sich bewegendes verhinderndes Objekt.

In einer Implementierung berücksichtigt das Prüfen ferner den Typ des verhindernden Objektes, insbesondere anhand einer vorbestimmten Auflistung. So kann für manche verhindernden Objekte ein Phantomobjekt angenommen werden und für andere wiederum nicht. Ist das verhindernde Objekt ein Bus, so kann ein Phantomobjekt vor dem Bus angenommen werden. Ist das verhindernde Objekt beispielsweise ein Busch auf einer Verkehrsinsel, so muss hinter diesem Busch kein Phantomobjekt angenommen werden.

Weiterhin kann das Verfahren umfassen: Bestimmen des Typs des hinzuzufügenden Phantomobjektes und insbesondere dessen Belegung des Umfeldes abhängig von dem Typ des verhindernden Objektes, insbesondere anhand einer vorbestimmten Zuordnung, die insbesondere die Auflistung umfasst. Wenn beispielsweise ein Bus das verhindernde Objekt ist, kann vor dem Bus ein Fußgänger als Typ des Phantomobjekts angenommen werden, nicht hingegen ein Motorradfahrer. Der Typ des Phantomobjekts kann sich nach einer vorbestimmten Zuordnung richten. Die Zuordnung verknüpft den Typ des Objektes mit dem Typ des Phantomobjekts. Der Typ des Objektes alleine kann als Auflistung verstanden werden, für welche Typen von verhindernden Objekten Phantomobjekte angenommen werden. Ferner wird insbesondere die Belegung des Umfeldes durch das Phantomobjekt bestimmt, also dessen Position. Die Belegung kann anhand der Entfernungsgrenze bestimmt werden, so dass die Belegung gerade jenseits der Grenze positioniert wird, für die noch Sensormessungen vorhanden sind, mit anderen Worten: gerade innerhalb des Bereiches bzw. an der Grenze des Bereiches (bspw. 1m oder 0,5m von der Grenze des Bereiches entfernt). Die Belegung durch das Phantomobjekt kann durch eine vorgespeicherte Zuordnung spezifiziert sein.

Weiterhin kann der Typ des hinzuzufügenden Phantomobjektes abhängig von dem Typ der Umgebung und/oder der Tageszeit bestimmt werden. Beispielsweise kann in der Umgebung einer Schule tagsüber hinter einem parkenden und verhindernden Fahrzeug ein (spielendes) Kind als Phantomobjekt angenommen werden (, das sich aus dem verdeckten Bereich auf die Straße bewegt). Umgekehrt wird hinter einem Fahrzeug auf einer Landstraße bei Nacht kein Fußgänger angenommen werden.

In einer bevorzugten Weiterbildung berücksichtigt das Prüfen ferner, ob die in dem Bereich geltenden Verkehrsregeln oder vordefinierten weiteren Regeln vorsehen, dass sich in dem Bereich andere Verkehrsteilnehmer befinden. Der Prüfungsaspekt hinsichtlich der Verkehrsregeln kann aufgrund von erkannten Fahrbahnmarkierungen (beispielsweise einem Teil eines Zebrastreifens oder einer Fahrbahnmarkierung und dessen angenommener Weiterführung) ausgeführt werden. Der Prüfungsaspekt hinsichtlich der weiteren Regeln kann aufgrund von vordefinierten Vorschriften ausgeführt werden. Um zu vermeiden, zu viele Phantomobjekte im erweiterten Umfeldmodell vorzusehen, werden Phantomobjekte nur dort angenommen, wo aller Wahrscheinlichkeit auch mit Ihnen zu rechnen ist, also nur in einem verdeckten Bereich, in dem gleichzeitig die Verkehrsregeln oder die vordefinierten weiteren Regeln andere Verkehrsteilnehmer vorsehen. So ist beispielsweise mit Fußgängern an einer von einem stehenden Fahrzeug verdeckten Fußgängerkreuzung zu rechnen, vor einem stehenden Bus oder mit einem PKW vor einem zu überholenden LKW. Dabei können andere Verkehrsteilnehmer nicht nur dort angenommen werden, wo es die Verkehrsregeln vorsehen, sondern auch dort, wo sie sich typischerweise befinden, also beispielsweise vor einem stehenden Bus ohne Fußgängerüberweg. Um eine sinnvolle Funktionsweise von Fahrerassistenzsystemen zu gewährleisten sollten nicht alle möglichen Phantomobjekte unabhängig von Verkehrsregeln oder sonstigen Regeln eingezogen werden, also beispielsweise keine einstürzenden Brücken oder eine Gruppe von Geisterfahrern auf der Autobahn. Ansonsten wären die Funktionsweisen von Fahrerassistenzsystemen stark gefährdet. Vorteilhafterweise wird bei der Auswahl der weiteren Regeln (die über die Verkehrsregeln hinausgehen) ein Gleichgewicht zwischen Defensivität und Assertivität gefunden. Eine sonstige Regel ist beispielsweise, dass sich der andere Verkehrsteilnehmer zwar nicht an die Verkehrsregeln hält aber sich trotzdem vorhersagbar verhält und subjektiv defensiv.

In einer Weiterbildung umfasst das Verfahren ferner: Falls ein Phantomobjekt hinzuzufügen ist: Bestimmen der Bewegungsrichtung, mehrerer möglicher zukünftiger Trajektorien des Phantomobjektes sowie deren zugehörige Eintritts-Wahrscheinlichkeiten, und/oder das Verhalten des hinzuzufügenden Phantomobjekts; und Ergänzen des erweiterten Umfeldmodells um Informationen hinsichtlich der Bewegungsrichtung. Die Bewegungsrichtung kann anhand des Typs des verhindernden Objektes und der Anordnung der Objekte auf der Fahrbahn bestimmt werden. Ebenso können die möglichen zukünftigen Trajektorien und deren Eintritts-Wahrscheinlichkeiten und das Verhalten anhand des Typs des verhindernden Objektes und der Anordnung der Objekte auf der Fahrbahn bestimmt werden. Dabei kann auf vorgespeicherte Szenarien (typische Konstellationen von Typen und Anordnungen) zurückgegriffen werden. So kann beispielsweise angenommen werden, dass ein von einem haltenden Bus verdeckter Fußgänger die Fahrbahn überquert. Für die Bewegungsrichtung kann stets eine "worst case" Annahme getroffen werden, also dass die Bewegungsrichtung auf Kollisionskurs mit der Fahrtrichtung des Fahrzeugs ist. Ein Fahrerassistenzsystem wäre dann dazu eingerichtet (auch bei der Berücksichtigung mehrerer Trajektorien) das Kollisionsrisiko zu minimieren.

In einem anderen Aspekt veranlasst ein Computerprogramm einen Computer bei der Ausführung des Computerprogramms zur Ausführung eines der vorstehenden Verfahren.

In einem anderen Aspekt umfasst eine Rechenvorrichtung elektronische Rechenmittel, die dazu eingerichtet sind, eines der vorstehenden Verfahren auszuführen. Die elektronischen Rechenmittel können ein Computer, ein Mikrocontroller oder dedizierte Schaltkreise sein. Die Rechenvorrichtung kann durch ein Computerprogramm zur Ausführung des Verfahrens veranlasst werden.

In wieder einem anderen Aspekt umfasst ein Kraftfahrzeug Sensoren zur Erfassung von Objekten im Umfeld des Fahrzeugs und vorstehende Rechenmittel.

### KURZE BESCHREIBUNG DER ZEICHNUNG

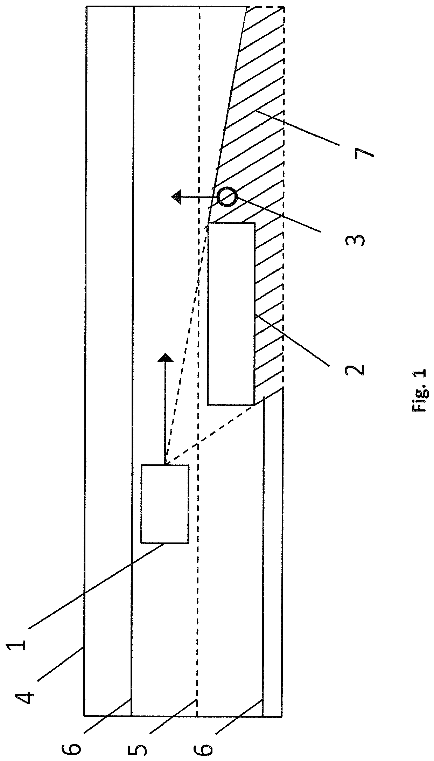

Fig. 1 zeigt eine beispielhafte Ergänzung des Umfeldmodells gemäß einem Ausführungsbeispiel.

### DETAILLIERTE BESCHREIBUNG DES AUSFÜHRUNGSBEISPIELS

Fig. 1 zeigt eine beispielhafte Ergänzung des Umfeldmodells gemäß einem Ausführungsbeispiel. Ein Fahrzeug 1 befindet sich auf einer Fahrbahn, die durch die Fahrbahnbegrenzung 6 und den Mittelstreifen 5 gekennzeichnet ist, und bewegt sich entsprechend dem dargestellten Pfeil. Das Fahrzeug 1 verfügt über Sensoren zur Erfassung des Umfeldes und erstellt mithilfe der Sensormessungen ein Umfeldmodell. Dieses gibt die Belegung des Umfeldes durch Objekte und deren Typ an. Das Umfeldmodell bildet das Umfeld im Ausschnitt 4 ab, der durch die Reichweite der Sensoren und Rechenkapazitäten definiert wird. In dem Umfeld erkennt das Fahrzeug 1 die Fahrbahnbegrenzungen 6, den Mittelstreifen 5 und den Bus 2 auf der rechten Fahrspur. Die Sensoren für den vorderen Bereich des Fahrzeugs sind ungefähr in der Mitte der Front des Fahrzeugs untergebracht. Dementsprechend verdeckt der haltende Bus 2 einen Bereich 7 des Umfeldes (schraffiert in Fig. 1 dargestellt), der ansonsten mit den Sensoren abgetastet werden könnte und in dem ansonsten Objekte erkannt werden könnte. Zur Erläuterung der Verdeckung aufgrund des Busses 2 sind gestrichelt die Sichtwinkel der Sensoren in der Mitte der Front des Fahrzeugs 1 eingezeichnet. Das Fahrzeug umfasst Rechenmittel, die mithilfe der Sensormessungen ein Umfeldmodell erstellen. Ferner prüfen die Rechenmittel, ob in dem Umfeldmodell ein Phantomobjekt zu ergänzen ist. Dazu wird der Typ des Objektes 2 berücksichtigt, nämlich, dass das Objekt 2 ein haltender Bus ist. In einer Zuordnung ist hinterlegt, dass für einen haltenden Bus ein Fußgänger als Phantomobjekt dem Umfeldmodell hinzuzufügen ist. Zusätzlich ist in der Zuordnung für den stehenden Bus 2 die Belegung durch den Fußgänger 3 hinterlegt (dessen Platzierung), nämlich dass der Fußgänger an der Grenze des Umfeldmodells in einer Entfernung von 1m vor dem Bus 2 anzunehmen ist, dies entspricht einer für diesen Bereich spezifizierten Regel, die nicht den Verkehrsregeln entspricht. Folglich bestimmen die Rechenmittel ein Phantomobjekt 3 vom Typ Fußgänger an der spezifizierten Belegung. Dem Phantomobjekt 3 wird die Bewegungsrichtung zur Mitte der Fahrbahn zugeordnet, wie es in der vorgespeicherten Zuordnung ebenfalls hinterlegt ist (angedeutet durch den Pfeil in Fig. 1). Das Umfeldmodell wird mit den Informationen bezüglich der Belegung, des Typs und der Bewegungsrichtung des Phantomobjekts 3 erweitert. Dieses erweiterte Bewegungsmodell wird bereitgestellt und kann von Fahrerassistenzsystemen verwendet werden.

## Patentansprüche

1. Verfahren zum Bereitstellen eines Umfeldmodells für ein Fahrzeug, umfassend:
Bereitstellen eines Umfeldmodells, das auf der Grundlage von Sensormessungen von Sensoren des Fahrzeugs gewonnen wurde; wobei das Umfeldmodell Informationen hinsichtlich der Belegung des Umfeldes durch Objekte und insbesondere hinsichtlich des Typs der Objekte im Umfeld des Fahrzeugs bereitstellt;
Bestimmen eines Bereiches des Umfeldes, für den von dem Umfeldmodell keine Informationen hinsichtlich einer Belegung durch Objekte bereitgestellt werden; wobei der Bereich innerhalb einer Entfernungsgrenze liegt, für die das Umfeldmodell auf der Grundlage von Sensormessungen Informationen hinsichtlich der Belegung durch Objekte bereitstellen könnte;
Prüfen, ob in dem Bereich ein Phantomobjekt dem Umfeldmodell hinzuzufügen ist, insbesondere anhand des Typs des Objektes und anhand von vordefinierten Vorschriften, wobei ein Phantomobjekt ein virtuelles Objekt ist und ein Objekt ist, das nicht aufgrund von Sensormessungen bestimmt wurde;
Falls ein Phantomobjekt hinzuzufügen ist: Bestimmen der Belegung durch das Phantomobjekt in dem Bereich des Umfeldes; Erzeugen eines erweiterten Umfeldmodells durch das Hinzufügen von Informationen hinsichtlich der Belegung durch das Phantomobjekt zu dem Umfeldmodell;
Bereitstellen des erweiterten Umfeldmodells.

2. Verfahren nach Anspruch 1, wobei das Prüfen das Bestimmen umfasst, ob ein Objekt im Umfeld Sensormessungen von Sensoren des Fahrzeugs in dem Bereich zumindest derart verhindert, dass für diesen Bereich keine Informationen von dem Umfeldmodell bereitgestellt werden können.

3. Verfahren nach Anspruch 2, wobei das Prüfen ferner den Typ des verhindernden Objektes berücksichtigt, insbesondere anhand einer vorbestimmten Auflistung.

4. Verfahren nach Anspruch 3, ferner umfassend: Bestimmen des Typs des Phantomobjektes und insbesondere dessen Belegung des Umfeldes abhängig von dem Typ des verhindernden Objektes, insbesondere anhand einer vorbestimmten Zuordnung, die insbesondere die Auflistung umfasst.

5. Verfahren nach Anspruch 4, wobei die Zuordnung eine Regel für die Belegung durch das Phantomobjekt spezifiziert, wobei eine Regel insbesondere die Belegung in räumlichen Bezug zu dem Bereich und/oder dem Objekt setzt.

6. Verfahren nach einem der vorhergehenden Ansprüche, wobei das Prüfen ferner berücksichtigt, ob die in dem Bereich im Umfeldmodell erkannten geltenden Verkehrsregeln oder vordefinierten weiteren Regeln vorsehen, dass sich in dem Bereich andere Verkehrsteilnehmer befinden.

7. Verfahren nach einem der vorhergehenden Ansprüche, wobei das Prüfen gemäß vordefinierten und gespeicherten Vorschriften ausgeführt wird.

8. Verfahren nach einem der vorhergehenden Ansprüche, ferner umfassend, falls ein Phantomobjekt hinzuzufügen ist: Bestimmen der Bewegungsrichtung des hinzuzufügenden Phantomobjekts, insbesondere anhand einer Zuordnung; und Ergänzen des erweiterten Umfeldmodells um Informationen hinsichtlich der Bewegungsrichtung.

9. Computerprogramm, das einen Computer bei der Ausführung des Computerprogramms zur Ausführung eines Verfahrens nach einem der vorhergehenden Ansprüche veranlasst.

10. Rechenvorrichtung, umfassend elektronische Rechenmittel, die dazu eingerichtet sind, ein Verfahren nach einem der Ansprüche 1 bis 8 auszuführen.

11. Kraftfahrzeug, umfassend Sensoren zur Erfassung von Objekten im Umfeld des Fahrzeugs und eine Rechenvorrichtung nach Anspruch 10.

## Claims

1. A method for providing a model of the surroundings for a vehicle, comprising:
providing a model of the surroundings which has been obtained on the basis of sensor measurements by sensors of the vehicle; wherein the model of the surroundings provides information with regard to an occupation of the surroundings by objects and more especially with regard to the type of objects in the surroundings of the vehicle;
determining a region of the surroundings for which no information with regard to occupation by objects is provided by the model of the surroundings;
wherein the region lies within a distance limit for which the model of the surroundings could provide information with regard to the occupation by objects on the basis of sensor measurements;
checking whether a phantom object should be added to the model of the surroundings in the region, more especially on the basis of the type of object and on the basis of predefined specification, wherein a phantom object is a virtual object and is an object that has not been determined on the basis of sensor measurements;
if a phantom object should be added: determining the occupation by the phantom object in the region of the surroundings; generating an extended model of the surroundings by adding information with regard to the occupation by the phantom object to the model of the surroundings;
providing the extended model of the surroundings.

2. A method according to claim 1, wherein checking whether a phantom object should be added to the model comprises a determination of whether an object in the surroundings prevents sensor measurements by sensors of the vehicle in the region at least in such a way that no information can be provided by the model of the surroundings for this region.

3. A method according to claim 2, wherein checking whether a phantom object should be added to the model also takes into consideration the type of object preventing a sensor measurement, more especially on the basis of a predetermined list.

4. A method according to claim 3, further comprising: determining the type of phantom object and more especially occupation thereof in the surroundings depending on the type of object preventing a sensor measurement, more especially on the basis of a predetermined assignment, which more especially comprises the predetermined list.

5. A method according to claim 4, wherein the assignment specifies a rule for the occupation by the phantom object, wherein a rule more especially sets the occupation in spatial relation to the region and/or the object.

6. A method according to any one of the preceding claims, wherein said checking also takes into consideration whether applicable traffic rules or predefined further rules detected in the region of the model of the surroundings provide for other road users to be present in the region.

7. A method according to any one of the preceding claims, wherein said checking is carried out in accordance with predefined and stored specifications.

8. A method according to any one of the preceding claims, further comprising, if a phantom object should be added: determining the direction of movement of the phantom object to be added, more especially on the basis of an assignment; and supplementing the extended model of the surroundings by information relating to the direction of movement.

9. A computer program which prompts a computer to carry out a method according to any one of the preceding claims when the computer program is run.

10. A computing device, comprising electronic computing means which are designed to carry out a method according to any one of claims 1 to 8.

11. A motor vehicle, comprising sensors for detecting objects in the environment of the vehicle and a computing device according to claim 10.

## Revendications

1. Procédé de préparation d'un modèle d'environnement d'un véhicule comprenant des étapes consistant à :
préparer un modèle d'environnement qui a été obtenu sur le fondement de mesures de capteurs du véhicule, le modèle d'environnement fournissant des informations concernant l'occupation de l'environnement par des objets et en particulier concernant le type des objets se trouvant dans l'environnement du véhicule,
déterminer une zone de l'environnement pour laquelle aucune information concernant une occupation par des objets n'a été fournie par le modèle d'environnement, cette zone se trouvant dans une limite d'environnement pour laquelle le modèle d'environnement aurait pu fournir des informations concernant l'occupation par des objets sur le fondement de mesures de capteurs,
vérifier si, dans la zone un objet fantôme doit être ajouté au modèle d'environnement, en particulier à l'aide du type de l'objet et de prescriptions prédéfinies, un objet fantôme étant un objet virtuel et un objet qui n'a pas été déterminé sur le fondement des mesures de capteurs,
lorsqu'un objet fantôme doit être ajouté, déterminer l'occupation par l'objet fantôme dans la zone de l'environnement, produire un modèle d'environnement élargi par l'addition d'informations concernant l'occupation par l'objet fantôme au modèle d'environnement,
préparer le modèle d'environnement élargi.

2. Procédé conforme à la revendication 1,
selon lequel l'étape de vérification comprend une étape consistant à déterminer si un objet situé dans l'environnement empêche des mesures de capteurs du véhicule dans sa zone, au moins de sorte que pour cette zone, aucune information ne puisse être fournie par le modèle d'environnement.

3. Procédé conforme à la revendication 2,
selon lequel l'étape de vérification prend en outre en considération le type d'objet source d'empêchement, en particulier à l'aide d'une liste prédéfinie.

4. Procédé conforme à la revendication 3,
comprenant en outre une étape consistant à déterminer le type de l'objet fantôme et en particulier son occupation de l'environnement en fonction du type de l'objet source d'empêchement, en particulier à partir d'une classification prédéfinie qui comprend en particulier la liste.

5. Procédé conforme à la revendication 4,
selon lequel la classification spécifie une règle d'occupation par l'objet fantôme, cette règle fixant, en particulier l'occupation spatiale par rapport à la zone et/ou l'objet.

6. Procédé conforme à l'une des revendications précédentes,
selon lequel l'étape de vérification prend en outre en considération le fait que les règles de circulation en vigueur identifiées dans la zone du modèle d'environnement ou d'autres règles prédéfinies prévoient ou non que d'autres participants au trafic se trouvent dans la zone.

7. Procédé conforme à l'une des revendications précédentes,
selon lequel l'étape de vérification est mise en oeuvre conformément à des prescriptions prédéfinies et enregistrées.

8. Procédé conforme à l'une des revendications précédentes,
comprenant en outre une étape consistant lorsqu'un objet fantôme doit être ajouté, à déterminer la direction de déplacement de l'objet fantôme devant être ajouté en particulier à l'aide d'une classification et à compléter le modèle d'environnement élargi par des informations concernant ce sens de déplacement.

9. Programme d'ordinateur permettant à un ordinateur, lors de l'exécution de ce programme, de mettre en oeuvre un procédé conforme à l'une quelconque des revendications précédentes.

10. Dispositif de calcul comprenant des moyens de calcul électroniques permettant la mise en oeuvre d'un procédé conforme à l'une des revendications 1 à 8.

11. Véhicule équipé de capteurs permettant de détecter des objets dans l'environnement du véhicule ainsi qu'un dispositif de calcul conforme à la revendication 10.
